# EUROPEAN PATENT SPECIFICATION

(11) **EP 3 355 635 B1**
(45) Date of publication and mention of the grant of the patent: **08.07.2020**
(21) Application number: 16847788.3
(22) Date of filing: 06.05.2016
(51) Int. Cl.: H04W 72/04, H04L 5/00, H04L 27/00

(54) **MULTIPLEXING SENDING AND RECEIVING METHOD AND DEVICE FOR DISCOVERY SIGNAL AND PHYSICAL DOWNLINK SHARED CHANNEL**
MULTIPLEX-SENDE- UND EMPFANGSVERFAHREN UND VORRICHTUNG FÜR ENTDECKUNGSSIGNAL UND GEMEINSAMEN PHYSIKALISCHEN DOWNLINK-KANAL
PROCÉDÉ ET DISPOSITIF D'ENVOI ET DE RÉCEPTION AVEC MULTIPLEXAGE DE SIGNAL DE DÉCOUVERTE ET DE CANAL PHYSIQUE PARTAGÉ DE LIAISON DESCENDANTE

(30) Priority: 25.09.2015 CN 201510623692
(43) Date of publication of application: 01.08.2018
(73) Proprietor: ZTE Corporation, Shenzhen, Guangdong 518057 (CN)
(72) Inventor: XU, Hanqing, Shenzhen, Guangdong 518057 (CN); ZHAO, Yajun, Shenzhen, Guangdong 518057 (CN); MO, Linmei, Shenzhen, Guangdong 518057 (CN)
(74) Representative: Wallinger Ricker Schlotter Tostmann
(86) International application number: PCT/CN2016/081318
(87) International publication number: WO 2017/049906

(56) References cited:
- WO-A1-2014/092475
- WO-A1-2015/097998
- CN-A- 105 338 568
- SHARP: "DRS design for LAA", 3GPP DRAFT; R1-154067 DRS DESIGN FOR LAA_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001449, Retrieved from the Internet: URL:http://www.3gpp.org/ftp/Meetings_3GPP_ SYNC/RAN1/Docs/ [retrieved on 2015-08-23]
- PANASONIC ET AL: "Way Forward on Discovery Signal for LAA", 3GPP DRAFT; R1-151174, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Paris, France; 20150324 - 20150326 26 March 2015 (2015-03-26), XP050951532, Retrieved from the Internet: URL:http://www.3gpp.org/ftp/tsg_ran/WG1_RL 1/TSGR1_AH/LTE_LAA_1503/Docs/ [retrieved on 2015-03-26]
- ZTE: "Details of DRS design for LAA", 3GPP DRAFT; R1-154075 DETAILS OF DRS DESIGN FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001456, Retrieved from the Internet: URL:http://www.3gpp.org/ftp/Meetings_3GPP_ SYNC/RAN1/Docs/ [retrieved on 2015-08-23]
- KOORAPATY, H.: 'Status Report to TSG; Work Item on Licensed-Assisted Access to Unlicensed Spectrum' 3GPP TSG RAN MEETING #69 RP-151325 04 September 2015, XP050999694
- KOORAPATY, H.: 'Status Report to TSG; Work Item on Licensed-Assisted Access to Unlicensed Spectrum' 3GPPTSG RAN MEETING #69 RP-151390 08 September 2015, XP050999864
- HUAWEI ET AL.: 'Clarifications on PDSCH and EPDCCH rate matching for CSI-RS in DRS' 3GPPTSG RAN WG1 MEETING #78BIS R1-143908 27 September 2014, XP050869583

## Description

### TECHNICAL FIELD

The present disclosure relates to, but not limited to the field of wireless communications, and in particular to a method for transmitting and receiving a Discovery Reference Signal (DRS) and a Physical Downlink Shared Channel (PDSCH), and corresponding devices.

### BACKGROUND

A Long Term Evolution-Unlicensed (LTE-U) refers to the follows. An LTE is deployed in an unlicensed carrier to meet an increasing capacity requirement of a wireless communication system and to improve the using efficiency of an unlicensed spectrum. The LTE-U is a possible important evolution direction of the LTE and a future wireless communication. During design of the LTE-U, it may be required to consider how to fairly and friendly contend with different systems such as Wireless Fidelity (WiFi) and radar and the same system LTE-U for an unlicensed carrier to transmit data, and it may also be required to avoid influence and retain LTE technical characteristics as much as possible. According to the expression of a 3rd Generation Partnership Project (3GPP) standard session, an LTE-U system may also be referred to an LTE Licensed Assisted Access (LAA) system.

A communication system using an unlicensed carrier needs to avoid using an unlicensed carrier currently used by an existing station in the unlicensed carrier, and otherwise, inter-system interference will be caused. So, in some countries (Europe and Japan), an unlicensed carrier is forcibly required to support a Listen before Talk (LBT) function. Before a certain unlicensed carrier is used, it may be required to execute a Clear Channel Assessment (CCA) function, when it is discovered that a device is currently using the unlicensed carrier or detected signal energy exceeds a CCA threshold, access is delayed, and when it is discovered that a channel is vacant or detected signal energy is lower than the CCA threshold, the unlicensed carrier is occupied.

To use an unlicensed carrier, it also may be required to solve the problems of cell discovery, synchronization, Radio Resource Management (RRM) measurement and the like, and a DRS specified by a 3GPP Rel-12 may be taken as a research reference. A current pattern design on an LAA DRS is mainly based on a Rel-12 DRS and some characteristics of an unlicensed carrier, e.g., factors such as time domain continuity, frequency domain occupied bandwidth rule requirements and measurement accuracy, which will not be elaborated herein.

Any corresponding solution has not been proposed at present for the problems about how to perform multiplex transmission on an LAA DRS and a PDSCH and how to receive the LAA DRS and the PDSCH during multiplex transmission. If the problems are not well solved, transmission and receiving of the LAA DRS will be affected, and rate matching of the PDSCH will also be affected, thereby making a mistake in data receiving.

The document "DRS design for LAA", R1-154067, discloses that DRS is allowed to be transmitted in at least one of different time positions within the configured DMTC and that PDSCH within the configured DMTC is not mapped to the resource elements corresponding to a rate-matching pattern indicated by the DCI scheduling the PDSCH.

The document "Way forward on discovery signal for LAA", R1-151174, discloses that if DRS is transmitted in a subframe carrying PDSCH, UE rate matches around the DRS signals.

The document "Details of DRS design for LAA", R1-154075, discloses that the LAA DRS is subjected to LBT and is allowed to be transmitted in at least one of different time positions within the DMTC.

The document "Status Report to TSG; Work Item on Licensed-Assisted Access to Unlicensed Spectrum", RP-151325, discloses that in an unlicensed carrier, DRS and PDSCH can be multiplexed and transmitted within a subframe, at least in subframes 0 and 5.

### SUMMARY

The present invention is defined by the appended independent claims with the dependent claims providing further details of the invention. In the following, embodiments not falling within the scope of the claims should be understood as examples useful for understanding the invention.

A multiplex transmission and receiving method for an LAA DRS and a PDSCH and corresponding devices solve a problem about how to perform multiplex transmission and receiving on an LAA DRS and a PDSCH within a data transmission burst and a problem about PDSCH rate matching.

After the drawings and the detailed descriptions are read and understood, other aspects may be understood.

### BRIEF DESCRIPTION OF DRAWINGS

FIG. 1 is a flowchart of a method according to Embodiment 1 of the disclosure.
FIG. 2 is a composition structure diagram of a base station according to Embodiment 1 of the disclosure.
FIG. 3 is a flowchart of a method according to Embodiment 2 of the disclosure.
FIG. 4 is a composition structure diagram of a terminal according to Embodiment 2 of the disclosure.
FIG. 5 is a schematic diagram of a DRS pattern of a Rel12.

### DETAILED DESCRIPTION

The embodiments of the disclosure will be illustrated below in conjunction with the drawings in detail. It should be noted that the embodiments of the disclosure and the features of the embodiments may be randomly combined

### Embodiment 1

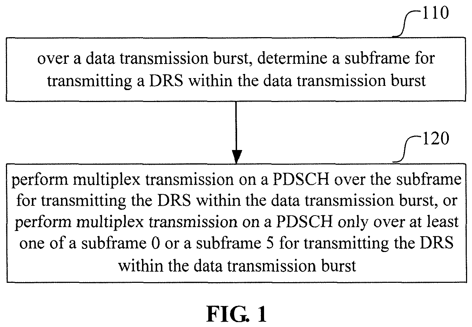

The present embodiment provides a multiplex transmission method for a DRS and a PDSCH, applied to a base station such as a base station of an LAA system. As shown in FIG. 1, the method includes the steps as follows.

At S110, over a data transmission burst, a subframe for transmitting a DRS within the data transmission burst is determined.

Unless otherwise specified herein, the DRS is an LAA DRS.

In the present embodiment, a subframe satisfying Condition 1, or Condition 2, or both of Condition 1 and Condition 2, or Condition 3 within the data transmission burst is determined as the subframe for transmitting the DRS:
Condition 1: the subframe is at least one of a subframe 0 or a subframe 5;
Condition 2: the subframe is a DRS candidate subframe; and
Condition 3: the subframe is a DRS candidate subframe, and a DRS transmission policy indicates that the subframe should transmit a DRS.

A candidate DRS transmission time period is generally referred to as a DRS candidate time point, wherein the DRS candidate time point may be greater than, smaller than or equal to a subframe. Herein, when the DRS candidate time point is equal to a subframe, a DRS candidate subframe is the DRS candidate time point; when the DRS candidate time point is smaller than a subframe, a DRS candidate subframe is a subframe containing the DRS candidate time point; and when the DRS candidate time point is greater than a subframe, each subframe contained in the DRS candidate time point is a DRS candidate subframe.

Herein, the DRS transmission policy includes: transmitting, within the data transmission burst, a DRS over a DRS candidate subframe satisfying one or more of the following conditions:
the DRS candidate subframe is a subframe configured by a system and fixed to transmit the DRS;
a duration between a previous subframe for transmitting the DRS and the DRS candidate subframe exceeds a set duration threshold;
the DRS candidate subframe is a first DRS candidate subframe within the data transmission burst, and a duration between the DRS candidate subframe and an initial position of the data transmission burst exceeds a set duration threshold;
the DRS candidate subframe is an i^{th} DRS candidate subframe within the data transmission burst, i being one of 1, 2, ..., I, I being the number of DRS candidate subframes within the data transmission burst; and
the DRS candidate subframe is DRS candidate subframe in a first DRS candidate subframe cluster within the data transmission burst.

At S120, multiplex transmission is performed on a PDSCH over the subframe for transmitting the DRS within the data transmission burst, or multiplex transmission is performed on a PDSCH only over at least one of a subframe 0 or a subframe 5 for transmitting the DRS within the data transmission burst.

A subframe not transmitting the DRS normally transmits a PDSCH. The PDSCH in "PDSCH transmission", "PDSCH receiving" or similar expression herein is downlink data transmitted to a terminal over the PDSCH by the base station, and is called "PDSCH" for short herein according to the habit of the art.

The step that multiplex transmission is performed on a PDSCH over the subframe includes at least one of the following actions:
the PDSCH is mapped to a symbol other than a symbol for transmitting the DRS in the subframe; or
the PDSCH is mapped to an RE other than an RE corresponding to a DRS pattern in a symbol for transmitting the DRS in the subframe.

For example, if a DRS time point of a DRS uses all symbols in a subframe, when multiplex transmission is performed on a PDSCH, the PDSCH may be mapped to an RE other than REs corresponding to DRS patterns in all symbols of the subframe. If a DRS time point of a DRS only occupies some symbols in a subframe such as symbols in a time slot, when multiplex transmission is performed on a PDSCH over the subframe, the PDSCH may be mapped to a symbol not transmitting the DRS in the subframe, and an RE other than an RE corresponding to a DRS pattern in a symbol for transmitting the DRS. It should be understood that multiplex transmission is performed on a PDSCH over the subframe herein on the premise of scheduling the PDSCH over the subframe.

In the present embodiment,
when the base station exclusively transmits a DRS over a subframe (no multiplex transmission on a PDSCH), a DRS pattern used by the subframe adopts a first pattern or a pattern in a first group of patterns;
when the base station performs multiplex transmission on a PDSCH over a subframe, a DRS pattern used by the subframe adopts a second pattern or a pattern in a second group of patterns; and
the second pattern is identical to or different from the first pattern, and the second group of patterns is identical to or different from the first group of patterns.

Herein,
when the second pattern is different from the first pattern, the second pattern includes a DRS, but does not include filled information, and when the second group of patterns is different from the first group of patterns, the pattern in the second group of patterns includes a DRS, but does not include filled information.

The filled information is information, other than a PDSCH and a DRS, filled for meeting at least one of time domain continuity or occupied bandwidth requirements.

In the present embodiment,
the base station may transmit at least one of DRS configuration information or DRS transmission information of the data transmission burst to the terminal by means of one or more of downlink control signaling (such as Downlink Control Information (DCI) signaling), a downlink control channel and broadcast information.

Herein,
the DRS configuration information includes one or more of the following information:
information indicating whether a DRS pattern adopted for exclusively transmitting a DRS is identical to a DRS pattern adopted for multiple transmission of the DRS and a PDSCH;
information about a DRS pattern;
information about a port for transmitting a DRS composition signal; and
information about signal composition of a DRS.

The DRS transmission information of the data transmission burst includes one or more of the following information:
information about whether a DRS is transmitted within the data transmission burst; and
position information about a subframe for transmitting a DRS within the data transmission burst.

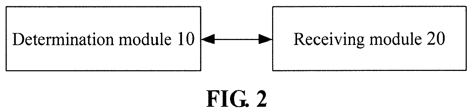

As shown in FIG. 2, the present embodiment further provides a base station, including:
a determination module 10, configured to determine, over a data transmission burst, a subframe for transmitting a DRS within the data transmission burst; and
a multiplexing module 20, configured to perform multiplex transmission on a PDSCH over the subframe for transmitting the DRS within the data transmission burst, or perform multiplex transmission on a PDSCH only over at least one of a subframe 0 or a subframe 5 for transmitting the DRS within the data transmission burst.

Herein,
the determination module determines a subframe satisfying Condition 1, or Condition 2, or both of Condition 1 and Condition 2, or Condition 3 within the data transmission burst as the subframe for transmitting the DRS:
Condition 1: the subframe is at least one of a subframe 0 or a subframe 5;
Condition 2: the subframe is a DRS candidate subframe; and
Condition 3: the subframe is a DRS candidate subframe, and a DRS transmission policy indicates that the subframe should transmit a DRS.

Herein, the DRS transmission policy includes: transmitting, within the data transmission burst, a DRS over a DRS candidate subframe satisfying one or more of the following conditions:
the DRS candidate subframe is a subframe configured by a system and fixed to transmit the DRS;
a duration between a previous subframe for transmitting the DRS and the DRS candidate subframe exceeds a set duration threshold;
the DRS candidate subframe is a first DRS candidate subframe within the data transmission burst, and a duration between the DRS candidate subframe and an initial position of the data transmission burst exceeds a set duration threshold;
the DRS candidate subframe is an i^{th} DRS candidate subframe within the data transmission burst, i being one of 1, 2, ..., I, I being the number of DRS candidate subframes within the data transmission burst; and
the DRS candidate subframe is DRS candidate subframe in a first DRS candidate subframe cluster within the data transmission burst.

Herein,
the operation that the multiplexing module performs multiplex transmission on a PDSCH over the subframe includes at least one of the following actions:
the PDSCH is mapped to a symbol other than a symbol for transmitting the DRS in the subframe; or
the PDSCH is mapped to an RE other than an RE corresponding to a DRS pattern in a symbol for transmitting the DRS in the subframe.

Herein, the base station further includes:
a pattern setting module, configured to: set, when a DRS is exclusively transmitted over a subframe, a DRS pattern used by the subframe as a first pattern or a pattern in a first group of patterns; and set, when multiplex transmission is performed on a PDSCH over a subframe, a DRS pattern used by the subframe as a second pattern or a pattern in a second group of patterns, wherein the second pattern is identical to or different from the first pattern, and the second group of patterns is identical to or different from the first group of patterns.

Herein,
the first pattern or the pattern in the first group of patterns includes a DRS and filled information.

When the second pattern is different from the first pattern, the second pattern includes a DRS, but does not include filled information, and when the second group of patterns is different from the first group of patterns, the pattern in the second group of patterns includes a DRS, but does not include filled information.

Herein, the filled information is information, other than a PDSCH and a DRS, filled for meeting at least one of time domain continuity or occupied bandwidth requirements.

Herein,
the base station further includes:
an information transmission module, configured to transmit at least one of DRS configuration information or DRS transmission information of the data transmission burst to a terminal by means of one or more of downlink control signaling, a downlink control channel and broadcast information.

Herein, the DRS configuration information transmitted by the information transmission module includes one or more of the following information:
information indicating whether a DRS pattern adopted for exclusively transmitting a DRS is identical to a DRS pattern adopted for multiple transmission of the DRS and a PDSCH;
information about a DRS pattern;
information about a port for transmitting a DRS composition signal; and
information about signal composition of a DRS.

Herein, the DRS transmission information, transmitted by the information transmission module, of the data transmission burst includes one or more of the following information:
information about whether a DRS is transmitted within the data transmission burst; and
position information about a subframe for transmitting a DRS within the data transmission burst.

### Embodiment 2

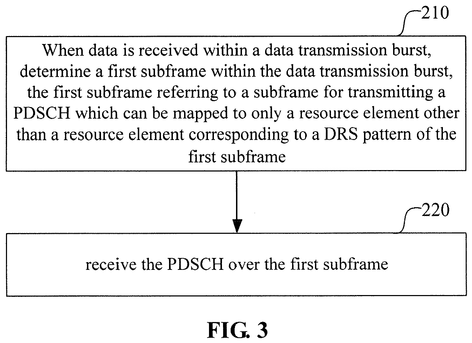

The present embodiment provides a method for receiving a PDSCH within a data transmission burst, applied to a terminal. As shown in FIG. 3, the method includes the steps as follows.

At S210, when data is received within a data transmission burst, a first subframe within the data transmission burst is determined, the first subframe referring to a subframe for transmitting a PDSCH which can be mapped to only an RE other than an RE corresponding to a DRS pattern of the first subframe.

A PDSCH can be mapped to only an RE other than an RE corresponding to a DRS pattern of the first subframe, that is, a PDSCH over the first subframe cannot be mapped to an RE corresponding to a DRS pattern of the first subframe.

In the present embodiment, the operation that a first subframe within the data transmission burst is determined includes:
a second subframe within the data transmission burst is determined according to at least one of a first appointment between the terminal and a base station or first indication information transmitted by the base station, the second subframe referring to a subframe indicating that an RE corresponding to a DRS pattern has been occupied by information other than a PDSCH or a subframe not transmitting information; and
Whether to perform multiplex transmission on a PDSCH over the second subframe is determined according to at least one of a second appointment between the terminal and a base station or second indication information transmitted by the base station, and when determining to perform multiplex transmission on a PDSCH over the second subframe, the second subframe is a first subframe within the data transmission burst.

The second subframe may be a subframe for transmitting the DRS. However, it should be noted that the base station may transmit other information except the DRS over an RE corresponding to the DRS in the DRS pattern, and the disclosure does not limit this. The terminal determines that the PDSCH cannot be mapped to the RE corresponding to the DRS in the DRS pattern, so that wrong receiving of the PDSCH can be avoided.

Herein, the first appointment includes: if a subframe within the data transmission burst satisfies Condition 1, or Condition 2, or both of Condition 1 and Condition 2, or Condition 3, the subframe is the second subframe:
Condition 1: the subframe is at least one of a subframe 0 or a subframe 5;
Condition 2: the subframe is a DRS candidate subframe; and
Condition 3: the subframe is a DRS candidate subframe, and a DRS transmission policy indicates that the subframe should transmit a DRS.

The second appointment includes: multiplex transmission is performed on a PDSCH over the second subframe within the data transmission burst; or
multiplex transmission is performed on a PDSCH only over at least one of a subframe 0 or a subframe 5 only when at least one of the subframe 0 or the subframe 5 are/is the second subframe within the data transmission burst.

In the present embodiment, the DRS pattern of the first subframe is determined according to at least one of a third appointment between the terminal and the base station or third indication information transmitted by the base station.

Herein, the third appointment includes:
when the first information is exclusively transmitted over a subframe, a DRS pattern used by the subframe is a first pattern or a pattern in a first group of patterns; and
when multiplex transmission is performed on the first information and a PDSCH over a subframe, a DRS pattern used by the subframe is a second pattern or a pattern in a second group of patterns.

The second pattern is identical to or different from the first pattern, and the second group of patterns is identical to or different from the first group of patterns.

In an example,
the first pattern or the pattern in the first group of patterns includes a DRS and filled information.

When the second pattern is different from the first pattern, the second pattern includes a DRS, but does not include filled information, and when the second group of patterns is different from the first group of patterns, the pattern in the second group of patterns includes a DRS, but does not include filled information.

Herein, the filled information is information, other than a PDSCH and a DRS, filled for meeting at least one of time domain continuity or occupied bandwidth requirements.

It should be noted that the DRS in the DRS pattern does not include filled information, but all pieces of information in the DRS pattern may be referred to as the DRS.

At S220, the PDSCH is received over the first subframe.

When it is known that the PDSCH over the first subframe cannot be mapped to the RE corresponding to the DRS pattern of the first subframe, and when rate matching is performed on the PDSCH received over the first subframe, data on the RE corresponding to the DRS pattern over the first subframe is wiped, other processing modes for ensuring correct receiving of the PDSCH are adopted.

The method in the present embodiment may further include the step as follows.

The terminal acquires one or more of the following information by means of one or more of downlink control signaling, a downlink control channel and broadcast information:
first indication information, indicating the second subframe within the data transmission burst;
second indication information, indicating whether to perform multiplex transmission on a PDSCH over the second subframe; and
third indication information, indicating a DRS pattern used over the first subframe.

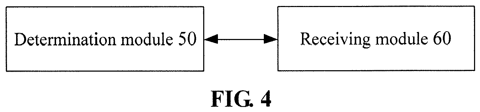

As shown in FIG. 4, the present embodiment also provides a terminal, including:
a determination module 50, configured to determine, when data is received within a data transmission burst, a first subframe within the data transmission burst, the first subframe referring to a subframe for transmitting a PDSCH which can be mapped to only an RE other than an RE corresponding to a DRS pattern of the first subframe; and
a receiving module 60, configured to receive the PDSCH over the first subframe.

Herein,
the operation that the determination module determines a first subframe within the data transmission burst includes:
a second subframe within the data transmission burst is determined according to at least one of a first appointment between the terminal and a base station or first indication information transmitted by the base station, the second subframe referring to a subframe indicating that an RE corresponding to a DRS pattern has been occupied by information other than a PDSCH or a subframe not transmitting information; and
Whether to perform multiplex transmission on a PDSCH over the second subframe is determined according to at least one of a second appointment between the terminal and a base station or second indication information transmitted by the base station, and when determining to perform multiplex transmission on a PDSCH over the second subframe, the second subframe is a first subframe within the data transmission burst.

Herein, the first appointment includes: if a subframe within the data transmission burst satisfies Condition 1, or Condition 2, or both of Condition 1 and Condition 2, or Condition 3, the subframe is the second subframe:
Condition 1: the subframe is at least one of a subframe 0 or a subframe 5;
Condition 2: the subframe is a DRS candidate subframe; and
Condition 3: the subframe is a DRS candidate subframe, and a DRS transmission policy indicates that the subframe should transmit a DRS.

Herein, the second appointment includes: multiplex transmission is performed on a PDSCH over the second subframe within the data transmission burst; or
multiplex transmission is performed on a PDSCH only over at least one of a subframe 0 or a subframe 5 only when at least one of the subframe 0 or the subframe 5 are/is the second subframe within the data transmission burst.

Herein, the terminal further includes: a DRS pattern determination module, configured to determine a DRS pattern of the first subframe according to at least one of a third appointment between the terminal and the base station or third indication information transmitted by the base station.

Herein, the third appointment includes:
when the first information is exclusively transmitted over a subframe, a DRS pattern used by the subframe is a first pattern or a pattern in a first group of patterns; and
when multiplex transmission is performed on the first information and a PDSCH over a subframe, a DRS pattern used by the subframe is a second pattern or a pattern in a second group of patterns.

Herein, the second pattern is identical to or different from the first pattern, and the second group of patterns is identical to or different from the first group of patterns.

Herein,
the first pattern or the pattern in the first group of patterns includes a DRS and filled information.

When the second pattern is different from the first pattern, the second pattern includes a DRS, but does not include filled information, and when the second group of patterns is different from the first group of patterns, the pattern in the second group of patterns includes a DRS, but does not include filled information.

Herein, the filled information is information, other than a PDSCH and a DRS, filled for meeting at least one of time domain continuity or occupied bandwidth requirements.

Herein, the terminal further includes:
an information receiving module, configured to acquire one or more pieces of the following information by means of one or more of downlink control signaling, a downlink control channel and broadcast information:
first indication information, indicating the second subframe within the data transmission burst;
second indication information, indicating whether to perform multiplex transmission on a PDSCH over the second subframe; and
third indication information, indicating a DRS pattern used over the first subframe.

Herein, the second subframe refers to a subframe for transmitting the DRS.

### Embodiment 3

The present embodiment relates to methods for determining a DRS time point (or referred to as a time position) allowing transmission of an LAA DRS based on an LBT in an LAA system. There are mainly two methods as follows.

Method A1: similar to a Rel-12 DRS, that is, an LAA DRS is allowed to be transmitted only at a fixed DRS time point within a configured DRS Measurement Timing Configuration (DMTC) based on an LBT. In an example, an LAA DRS DMTC period is 40ms, and a subframe 0, a subframe 40, a subframe 80 and the like are fixed DRS time points within each DMTC. Here, it is assumed that each DRS time point is a subframe, and a specific position and size of the DRS time point depend on design of a DRS time frequency pattern, design of a transmission mode and the like, which are only exemplary here. Each DRS occasion length is 1ms.

If the LBT is executed unsuccessfully prior to or at the beginning of the fixed DRS time point within the configured DMTC, that is, the LAA DRS is transmitted unsuccessfully, it is necessary to wait for an opportunity of transmitting a DRS at the fixed DRS time point within a next DMTC. The method has a small opportunity of transmitting the LAA DRS, and there is only one opportunity of DRS transmission within each DMTC. In a heavy-load scenario, there is no opportunity of transmission possibly, so as to affect functions such as cell recognition, synchronization and RRM measurement between an LAA base station and a UE.

Method A2: an LAA DRS is allowed to be transmitted over at least one DRS time point of multiple different DRS time points within a configured DMTC based on an LBT.

The method A2 may increase an opportunity of transmitting the LAA DRS, so as to reduce influence on functions such as cell recognition, synchronization and RRM measurement. The method A2 may also be divided into the following several methods.

Method A2-1: multiple different DRS time points are distributed within a certain time period or time window in the configured DMTC such as within an initial period of time of DMTC. For example, a DMTC period is 40ms, and each DRS occasion length is 1ms. A subframe 0, a subframe 1, a subframe 2, a subframe 3 and a subframe 4 may be taken as different DRS time points within this DMTC. A subframe 40, a subframe 41, a subframe 42, a subframe 43 and a subframe 44 are different DRS time points within a next DMTC.

Method A2-2: multiple different DRS time points are uniformly or periodically distributed in the whole DMTC. For example, a DMTC period is 40ms, and each DRS occasion length is 1ms. A subframe 0, a subframe 10, a subframe 20 and a subframe 30 are different DRS time points within this DMTC. A subframe 40, a subframe 50, a subframe 60 and a subframe 70 are DRS time points within a next DMTC.

Method A2-3: multiple different DRS time points are distributed in a configured DMTC or between DMTCs in a clustering manner. Each cluster is equivalent to a time window, each cluster contains multiple DRS time points, that is, each cluster has several opportunity points for transmitting the DRS, and each DMTC may contain several clusters or time windows. Preferably, clusters or time windows in the DMTC may be periodically distributed.

For example, it is assumed that a DMTC period is 40ms and each DRS occasion length is 1ms. Moreover, it is assumed that each DMTC clock contains two clusters and each cluster contains 5 DRS time points. For example, a subframe 0, a subframe 1, a subframe 2, a subframe 3 and a subframe 4 are different DRS time points in a first cluster within the DMTC. A subframe 20, a subframe 21, a subframe 22, a subframe 23 and a subframe 24 are different DRS time points within a next DMTC are different DRS time points in a second cluster within the DMTC. That is, there may be two opportunity clusters or time windows for transmitting a DRS within the DMTC, each opportunity cluster contains 5 subframes, and 5 possible opportunities of transmitting the DRS may be provided. The method A2-3 is relatively effective on DRS transmission via multiple base stations or multiple operators, an operator may contend for an opportunity cluster provided for several subordinate base stations to transmit a DRS, and another operator may contend for another opportunity cluster.

Within each DMTC, or in a time window (or cluster) within each DMTC, when the LBT is executed prior to or at the beginning of different DRS time points, it may be unnecessary to execute a complete LBT flow (including CCA and ECCA), a shortened LBT flow may be executed, or, a flow is continuously executed after the LBT flow of a previous DRS time point. For example, in the example of the method A2-1, the base station executes the LBT prior to or at the beginning of a subframe 0 (including CCA and ECCA), and prepares for DRS transmission. Herein, when an LBT ECCA random window length is N and N is counted down to N1, a time length allowing execution of the LBT in correspondence to the DRS time point has been completely intercepted, that is, an LBT corresponding to the subframe 0 is executed unsuccessfully, and the DRS is transmitted unsuccessfully over the subframe 0. The base station executes the LBT prior to or at the beginning of a next DRS time point namely a subframe 1. In this case, it is unnecessary to execute a complete CCA/ECCA flow, count-down from N1 may be continuously performed, that is, a flow is continuously executed after the LBT flow of the subframe 0.

In addition, there are also several methods for transmitting the LAA DRS. One method is: transmitting the LAA DRS via Short Control Signaling (SCS), where it is unnecessary to execute the LBT prior to DRS transmission. Another method is: transmitting the DRS in a non-periodic manner. This DRS time point at which the LAA DRS is transmitted in a non-DMTC rule may be referred to as a DRS time point other than a DMTC.

### Embodiment 4

The present embodiment relates to an LBT method associated with a DRS time point.

There are several modes of determining whether to execute an LBT within a DMTC or prior to or at the beginning of each DRS time point other than the DMTC, or determining whether each DRS time point attempts to transmit an LAA DRS.

Mode B1: an LBT is executed within and/or beyond a configured DMTC prior to or at the beginning of each DRS time point to attempt to transmit a DRS, and once the LBT is successful, the DRS will be transmitted.

This method is large in resource overhead, DRS LBT and transmission will cause reduction of a probability of securing an unlicensed carrier by data transmission, particularly in scenarios of heavy load and dense DRS time point distribution. However, DRS transmission and cell synchronization and measurement performances can be better guaranteed.

Mode B2: a fixed DRS time point exists within and/or beyond a configured DMTC, and an LBT must be executed prior to or at the beginning of the fixed DRS time point. Or, the base station will attempt to transmit a DRS at the fixed DRS time point. Whether to execute the LBT or transmit the DRS prior to or at the beginning of other DRS time points within and/or beyond the DMTC depends on whether the DRS is transmitted successfully at a DRS time point prior to the DRS time point. The fixed DRS time point may periodically exist.

That is to say, an LBT will be executed prior to or at the beginning of a fixed DRS time point within and/or beyond a configured DMTC, and if the LBT is executed successfully, a DRS is transmitted. Then, it is unnecessary to transmit the DRS at a subsequent DRS time point within the DMTC (or it is at least unnecessary to execute the LBT for DRS transmission), the LBT is directly executed prior to or at the beginning of a fixed DRS time point within a next DMTC to attempt to transmit the DRS, if the LBT is executed unsuccessfully, the LBT is executed prior to or at the beginning of a DRS time point after the fixed DRS time point, and once the DRS is transmitted successfully, a fixed DRS time point within a next DMTC is waited.

Mode B3: if a DRS is transmitted at a certain DRS time point successfully, a next DRS time point required to execute an LBT to transmit a DRS is a first DRS time point after addition of a period of time to the DRS time point. The period of time may be a DMTC period such as 40ms or other defined time lengths such as 20ms. A DRS time point between the present DRS time point and a next DRS time point required to execute the LBT to transmit the DRS is not required to attempt to transmit the DRS.

The mode B3 may avoid waste of an unlicensed carrier resource caused by DRS transmission at two too-close DRS time points.

Mode B4: if a data transmission burst contains a DRS time point (also referred to as a DRS candidate time point), whether to transmit a DRS at the DRS candidate time point depends on a method for multiplexing an LAA DRS and a PDSCH. It may be determined whether to transmit a DRS over at least one of a subframe 0 or a subframe 5 (at least one of the subframe 0 or the subframe 5 may be or may not be a DRS candidate transmission subframe or candidate time point) contained within the data transmission burst according to the method for multiplexing an LAA DRS and a PDSCH.

The base station needs to execute the LBT in order to transmit data, if the LBT is executed successfully, time of about 1ms to 10ms will be obtained to transmit data, and this time may be referred to as a data transmission burst. That is to say, the LBT executed for data transmission within the data transmission burst has been successful. The DRS is transmitted at a DRS time point within the data transmission burst and a DRS time point within a non-data transmission burst, and there may be different processing policies.

Application of the modes B1 to B4 will be elaborated below with the method A2-2.

The method B1 requires to execute an LBT prior to or at the beginning of each DRS time point (regardless of a fixed DRS time point or other candidate DRS time points) within and/or beyond a DMTC to attempt to transmit a DRS. For example, the LBT is required to be executed prior to or at the beginning of a subframe 0 (fixed DRS time point), a subframe 10, a subframe 20 and a subframe 30 within a first DMTC in the above example to transmit the DRS. The DRS will be transmitted if the LBT is successful.

The method B2 requires to execute an LBT prior to or at the beginning of a fixed DRS time point such as a subframe 0, a subframe 40 and a subframe 80 in the above example. The DRS will be transmitted if the LBT is successful. The DRS will not be transmitted if the LBT is unsuccessful.

Whether the LBT is executed prior to or at the beginning of other DRS candidate time points within the DMTC depends on whether the LBT is successful prior to or at the beginning of a DRS time point prior to the candidate time point.

If the LBT is executed successfully prior to or at the beginning of a subframe 0, the DRS is transmitted over the subframe 0. It is unnecessary to execute the LBT prior to or at the beginning of a subsequent candidate time point within the DMTC, that is, it does not attempt to transmit the DRS. The LBT is directly executed prior to or at the beginning of a fixed DRS time point (subframe 40) within a next DMTC, so as to attempt to transmit the DRS, and so on.

If the LBT is executed unsuccessfully prior to or at the beginning of a subframe 0, the LBT is executed prior to or at the beginning of a candidate time point (subframe 10). If the LBT is executed successfully, a DRS is transmitted. It is unnecessary to execute the LBT prior to or at the beginning of a subsequent candidate time point within the DMTC, and the LBT is directly executed prior to or at the beginning of a fixed DRS time point (subframe 40) within a next DMTC, so as to attempt to transmit the DRS. If the LBT is executed unsuccessfully, the LBT is continuously executed prior to or at the beginning of subsequent candidate time points (subframe 20 and subframe 30) within the DMTC, so as to attempt to transmit the DRS, and so on.

It is assumed that the period of time is 40ms for the method B3. The base station executes the LBT unsuccessfully over a subframe 0 and a subframe 10, and the DRS is not transmitted. If the DRS is transmitted over a subframe 20 successfully, a next DRS time point for executing the LBT to transmit the DRS is a subframe 60. It is unnecessary to attempt to transmit the DRS at DRS time points (subframe 30, subframe 40 and subframe 50) between the subframe 20 and the subframe 60.

Multiplex transmission and receiving of an LAA DRS and a PDSCH will be illustrated below with methods in several applications.

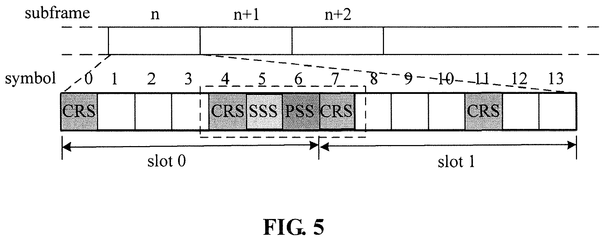

When a PDSCH is not transmitted, even if only a traditional signal (such as at least one of CRS, PSS/SSS or CSI-RS) is present on an LAA DRS time domain, FIG. 5 shows a pattern of a Rel-12 DRS. However, because a PSS/SSS occupied bandwidth (only 6 or 7 RBs in the middle of a system bandwidth are occupied) does not meet a rule requirement (an occupied bandwidth is required to be greater than or equal to 80% of a nominal bandwidth) during independent transmission of the DRS, it is necessary to fill in control information/broadcast information, or a Reference Signal (RS) (such as PSS, or SSS, or CRS, or CSI-RS) or other information or a new signal on a PSS/SSS frequency domain (frequency domain resources other than 6 or 7 RBs in the middle of the system bandwidth) during independent transmission of the DRS, so as to meet the rule requirement of the occupied bandwidth.

In addition, due to discontinuity of a Rel-12 DRS symbol time domain, an LAA DRS probably fills in control information/broadcast information, or an RS (such as PSS, or SSS, or CRS, or CSI-RS) or other information or a new signal on discontinuous blank symbols of the Rel-12 DRS time domain to satisfy time domain continuity; or, a time domain continuous symbol in a Rel-12 DRS is directly selected as the LAA DRS.

When the LAA DRS and the PDSCH are transmitted together, these pieces of control information/broadcast information, RSs, or other information or signals may be or may not be transmitted. The time domain continuity and the rule requirement of the occupied bandwidth may be met by transmitting the PDSCH.

Transmission of the LAA DRS and the PDSCH together refers to that a data transmission burst contains a DRS transmission subframe or a DRS time point. The DRS transmission subframe or the DRS time point may be located at the head, or middle or tail of the data transmission burst.

### Method C1

An LAA DRS and a PDSCH may be subjected to multiplex transmission over the same subframe, where the same subframe may only be at least one of a subframe 0 or a subframe 5, and the DRS and the PDSCH cannot be subjected to multiplex transmission over other subframes.

The method has the effects as follows. An LAA DRS transmission pattern (PSS/SSS/CRS) in a subframe 0/5 may be identical to a PSS/SSS/CRS pattern transmitted in the subframe 0/5 in the related art, that is, the same RE is occupied in the subframe 0/5. A PSS/SSS cannot be transmitted over other subframes in the related art, so that an LAA DRS transmission pattern over other subframes must be different from a signal pattern transmitted in the related art. Therefore, the PDSCH and the DRS can be multiplexed over the subframe 0/5 and cannot be multiplexed over other subframes, thereby reducing difficulty in rate matching of a UE.

A specific application scenario of the method C1 may be divided into the following two scenarios.

### Scenario 1:

A data transmission burst contains a DRS candidate time point (or a DRS candidate transmission subframe, a candidate time point length may be greater than or equal to or smaller than 1 subframe, the candidate transmission subframe mentioned herein only serves as a candidate time point example, and is not representative of narrowing down the candidate time point, the candidate time point includes the above DRS time point defined by a DMTC and a non-periodic or SCS DRS-to-be-transmitted time point defined in other manners, hereinafter the same). The DRS candidate transmission subframe or the DRS candidate time point in the scenario 1 is located at a subframe other than a subframe 0/5.

The scenario 1 may include the following several multiplexing methods.

### Method C1-1-1:

A PDSCH cannot be mapped to an entire DRS candidate transmission subframe or candidate time point of a non-0/5 subframe. That is, a PDSCH cannot be transmitted at an entire DRS candidate transmission subframe or candidate time point of a non-0/5 subframe.

In order to avoid channel robbing in a data transmission process, a DRS should be transmitted at the DRS candidate subframe or candidate time point no matter whether the DRS should be transmitted at the DRS candidate subframe or candidate time point (in some scenarios such as the above method B2/B3, some DRS candidate time points will attempt to transmit the DRS only when the DRS is transmitted unsuccessfully at the previous candidate time point).

A DRS time frequency pattern (or signal composition) transmitted at this time may be identical to or different from a time frequency pattern (or signal composition) during independent transmission of the DRS. Preferably, the same time frequency pattern or signal composition is adopted.

For the method C1-1-1, a UE may make at least one of the following assumptions or behaviors:
a UE needs to blindly detect a DRS over all DRS candidate transmission subframes;
a UE assumes that a PDSCH cannot be mapped over all DRS candidate transmission subframes other than a subframe 0/5; and
a UE assumes that a DRS will be transmitted over a DRS candidate transmission subframe other than a subframe 0/5 within a data transmission burst.

Downlink signaling or channel transmitted by a base station is received. The downlink signaling or channel informs at least one of whether DRS is transmitted or a rate matching pattern (or DRS transmission time frequency pattern). The downlink signaling or channel may include DCI signaling, PDCCH/EPDCCH, and the like. If DRS patterns are identical (preferably identical), DCI signaling may be not adopted to inform DRS pattern information. It is the same hereinafter in other examples.

### Method C1-1-2:

A PDSCH is normally transmitted at a DRS candidate transmission subframe or candidate time point other than a subframe 0/5, and a DRS is not transmitted at the DRS candidate transmission subframe other than the subframe 0/5. That is, the PDSCH may be mapped to a time frequency resource corresponding to a DRS pattern during transmission at the DRS candidate transmission subframe or candidate time point other than the subframe 0/5.

For the method C1-1-2, a UE may make at least one of the following assumptions or behaviors:
a UE needs to blindly detect a DRS over all DRS candidate transmission subframes;
a UE assumes that a PDSCH is normally transmitted at a DRS candidate transmission subframe other than a subframe 0/5, that is, it is unnecessary to wipe an RE corresponding to a DRS time frequency pattern during rate matching; and
a UE assumes that a DRS is not transmitted over a DRS candidate transmission subframe other than a subframe 0/5 within a data transmission burst.

Downlink signaling or channel transmitted by a base station is received. The downlink signaling or channel is configured to inform at least one of whether DRS is transmitted /or a rate matching pattern (or DRS transmission time frequency pattern). The downlink signaling or channel may include DCI signaling, PDCCH/EPDCCH, and the like. If DRS patterns are identical (preferably identical), DCI signaling may be not adopted to inform DRS pattern information.

### Method C1-1-3:

A DRS may be transmitted or may not be transmitted at a DRS candidate transmission subframe or candidate time point other than a subframe 0/5, which specifically depends on a DRS transmission mode, an LBT result or other factors such as the methods B2/B3. If the DRS is transmitted successfully, a PDSCH cannot be mapped to a candidate subframe or candidate time point other than a subframe 0/5, corresponding to the DRS during transmission. If the DRS is not transmitted, the PDSCH is normally transmitted at the DRS candidate transmission subframe or candidate time point other than the subframe 0/5, and may be mapped to a time frequency resource corresponding to a DRS pattern.

In the present method, an eNB may inform, by means of downlink signaling or channel such as DCI signaling, a UE of at least one of whether DRS is transmitted at the DRS candidate transmission subframe or candidate time point other than the subframe 0/5, or DRS configuration information (such as at least one of time frequency pattern, or DRS time frequency pattern type). The DCI signaling may be contained in scheduling signaling. Other non-scheduling UEs may perform blind detection, or may transmit at least one of information indicating whether DRS is transmitted or DRS configuration information (such as at least one of time frequency pattern, or DRS time frequency pattern type) in a broadcasting manner.

For the present method, a UE may make at least one of the following assumptions or behaviors:
a UE such as a non-serving UE may blindly detect a DRS over all DRS candidate transmission subframes;
a UE receives downlink signaling or channel transmitted by a base station, the downlink signaling or channel being configured to inform at least one of whether DRS is transmitted or a rate matching pattern (or DRS transmission time frequency pattern), where the downlink signaling or channel may include DCI signaling, PDCCH/EPDCCH, and the like;
a UE receives broadcast information to obtain information indicating whether a DRS is transmitted at at least one of a candidate time point or candidate transmission subframe, or a rate matching pattern (or DRS transmission time frequency pattern); and
a UE will assume that a PDSCH cannot be mapped at a DRS candidate transmission subframe other than a subframe 0/5 for transmitting a DRS, that is, the UE will acquire at least one of information about whether DRS is transmitted or a DRS time frequency pattern according to blind detection or a downlink signaling/channel/broadcast information receiving result, so as to punch an RE occupied by the DRS.

### Scenario 2:

If a data transmission burst contains at least one of a subframe 0 or a subframe 5, at least one of the subframe 0 or the subframe 5 is or is not a DRS candidate transmission subframe. A PDSCH and a DRS may be subjected to multiplex transmission over at least one of the subframe 0 or the subframe 5, and the PDSCH cannot be mapped to an RE occupied by the DRS in at least one of the subframe 0 or the subframe 5.

The scenario 2 may include the following several multiplexing methods.

### Method C1-2-1:

No matter whether at least one of a subframe 0 or a subframe 5 are/is or are/is not a DRS candidate transmission subframe, a base station will transmit a DRS over at least one of the subframe 0 or the subframe 5. A PDSCH and a DRS may be subjected to multiplex transmission over at least one of the subframe 0 or the subframe 5, and the PDSCH cannot be mapped to an RE occupied by the DRS in at least one of the subframe 0 or the subframe 5.

A DRS time frequency pattern or signal composition during multiplex transmission of the PDSCH may be identical to or different from that during independent transmission of the DRS. Method 1: the DRS is always transmitted by using the same time frequency pattern or signal composition, that is, the same time frequency pattern is adopted for independent transmission and multiplex transmission of the PDSCH. Method 2: a DRS with a predefined pattern 1 is transmitted during independent transmission of the DRS in order to meet time frequency continuity and a rule requirement of an occupied bandwidth. During transmission with the PDSCH, it is unnecessary to transmit control information/broadcast information, a new RS, or other information or signals filled to meet time frequency continuity and a rule requirement of an occupied bandwidth, and a DRS with a predefined pattern 2 is transmitted. During transmission with the PDSCH, the adopted DRS time frequency pattern and signal composition are relatively fixed or identical, that is, DRS time frequency patterns transmitted in at least one of the subframe 0 or the subframe 5 are identical. Method 3: DRS time frequency patterns and signal composition may be different regardless of independent transmission of a DRS and multiplex transmission of the PDSCH, or one of DRS pattern types within a limited range is selected for transmission. The method 2 is preferred.

The base station may transmit downlink signaling or channel to inform at least one of whether DRS is transmitted or rate matching pattern (or DRS transmission time frequency pattern). The downlink signaling or channel may include DCI signaling, PDCCH/EPDCCH, and the like.

For the method C1-2-1, a UE may make at least one of the following assumptions or behaviors:
a UE needs to blindly detect a DRS over all DRS candidate transmission subframes;
a UE assumes that a DRS will be transmitted over a subframe 0/5 within a data transmission burst; and
a UE will consider that a PDSCH cannot be mapped to an RE occupied by a DRS in at least one of a subframe 0 or a subframe 5 during rate matching.

A DRS time frequency pattern or signal composition during multiplex transmission of the PDSCH may be identical to or different from that during independent transmission of the DRS. However, a multiplex transmission DRS pattern is known to the UE, that is, a time frequency pattern occupied by the DRS in at least one of the subframe 0 or the subframe 5 is fixed.

Or, downlink signaling or channel transmitted by the base station is received. The downlink signaling or channel is configured to inform at least one of whether DRS is transmitted or a rate matching pattern (or DRS transmission time frequency pattern). The downlink signaling or channel may include DCI signaling, PDCCH/EPDCCH, and the like.

### Method C1-2-2

If at least one of a subframe 0 or a subframe 5 is a DRS candidate transmission subframe, a base station will transmit a DRS over at least one of the subframe 0 or the subframe 5. A PDSCH and a DRS may be subjected to multiplex transmission over at least one of the subframe 0 or the subframe 5, and the PDSCH cannot be mapped to an RE occupied by the DRS in at least one of the subframe 0 or the subframe 5.

A DRS time frequency pattern or signal composition during multiplex transmission of the PDSCH may be identical to or different from that during independent transmission of the DRS. Method 1: the DRS is always transmitted by using the same time frequency pattern or signal composition, that is, the same time frequency pattern is adopted for independent transmission and multiplex transmission of the PDSCH. Method 2: a DRS with a predefined pattern 1 is transmitted during independent transmission of the DRS in order to meet time frequency continuity and a rule requirement of an occupied bandwidth. During transmission with the PDSCH, it is unnecessary to transmit control information/broadcast information, a new RS, or other information or signals filled to meet time frequency continuity and a rule requirement of an occupied bandwidth, and a DRS with a predefined pattern 2 is transmitted. During transmission with the PDSCH, the adopted DRS time frequency pattern and signal composition are relatively fixed or identical, that is, DRS time frequency patterns transmitted in at least one of the subframe 0 or the subframe 5 are identical. Method 3: DRS time frequency patterns and signal composition may be different regardless of independent transmission of a DRS and multiplex transmission of the PDSCH, or one of DRS pattern types within a limited range is selected for transmission. The method 2 is preferred.

The base station may transmit downlink signaling or channel to inform at least one of whether DRS is transmitted or rate matching pattern (or DRS transmission time frequency pattern). The downlink signaling or channel may include DCI signaling, PDCCH/EPDCCH, and the like. If DRS patterns are always identical or patterns are identical during multiplexing and known to a UE, DCI signaling may not be adopted.

For the method C1-2-2, a UE may make at least one of the following assumptions or behaviors:
a UE needs to blindly detect a DRS over all DRS candidate transmission subframes;
a UE assumes that a DRS will be transmitted over a DRS candidate transmission subframe located at a subframe 0/5 within a data transmission burst; and
a UE will consider that a PDSCH cannot be mapped to an RE occupied by a DRS in a DRS candidate transmission subframe located at a subframe 0/5 during rate matching.

A DRS time frequency pattern or signal composition during multiplex transmission of the PDSCH may be identical to or different from that during independent transmission of the DRS. However, a multiplex transmission DRS pattern is known to the UE, that is, a time frequency pattern occupied by the DRS in at least one of the subframe 0 or the subframe 5 is fixed.

Or, downlink signaling or channel transmitted by the base station is received. The downlink signaling or channel is configured to inform at least one of whether DRS is transmitted or a rate matching pattern (or DRS transmission time frequency pattern). The downlink signaling or channel may include DCI signaling, PDCCH/EPDCCH, and the like.

### Method C1-2-3

If at least one of a subframe 0 or a subframe 5 are/is a DRS candidate transmission subframe, whether DRS is transmitted depends on a DRS transmission mode, an LBT result or other factors such as the methods B2/B3.

For example, whether a DRS is transmitted over at least one of a subframe 0 or a subframe 5 also depends on whether the DRS is transmitted successfully at a previous candidate time point or candidate subframe. If the DRS has been transmitted successfully at the previous candidate time point, the DRS may not be transmitted over at least one of the subframe 0 or the subframe 5. On the contrary, the DRS may be transmitted over at least one of the subframe 0 or the subframe 5.

If the DRS is transmitted over at least one of the subframe 0 or the subframe 5, a PDSCH cannot be mapped to an RE occupied by the DRS in at least one of the subframe 0 or the subframe 5.

If the DRS is not transmitted over at least one of the subframe 0 or the subframe 5, the PDSCH may be normally transmitted, and may be mapped to a time frequency resource corresponding to a DRS time frequency pattern.

An eNB may explicitly inform, by means of downlink signaling or channel, a UE of whether DRS is transmitted at a candidate transmission subframe (subframe 0/5). For example, the DCI signaling may be contained in scheduling signaling. Other non-scheduling UEs may perform blind detection, or may transmit at least one of information indicating whether DRS is transmitted or DRS configuration information (such as at least one of time frequency pattern, or DRS time frequency pattern type) in a broadcasting manner.

For the method C1-2-3, a UE may make at least one of the following assumptions or behaviors:
a UE such as a non-serving UE may blindly detect a DRS over all DRS candidate transmission subframes;
a UE receives downlink signaling or channel transmitted by a base station, the downlink signaling or channel being configured to inform at least one of whether DRS is transmitted or a rate matching pattern (or DRS transmission time frequency pattern), where the downlink signaling or channel may include DCI signaling, PDCCH/EPDCCH, and the like;
a UE may receive broadcast information to obtain information indicating whether a DRS is transmitted at at least one of a candidate time point or candidate transmission subframe, or a rate matching pattern (or DRS transmission time frequency pattern), where if DRS patterns are identical (preferably identical), DCI signaling may not be adopted; and
a UE will assume that a PDSCH cannot be mapped to an RE occupied by a DRS over a subframe 0/5, that is, the UE will acquire at least one of information about whether DRS is transmitted or a DRS time frequency pattern according to blind detection or a downlink signaling/channel/broadcast information receiving result, so as to punch the RE occupied by the DRS, and if DRS transmission is not detected, it is unnecessary to punch the RE corresponding to the DRS time frequency pattern.

### Method C2:

An LAA DRS and a PDSCH may be subjected to multiplex transmission over the same subframe, where the same subframe may include at least one of a subframe 0, a subframe 5, or other subframes.

The method has the effects as follows. In the method C1, the DRS and the PDSCH can be subjected to multiplex transmission over the subframe 0/5 and cannot be subjected to multiplex transmission over other subframes. Over other subframes except the subframe 0/5, the DRS instead of the PDSCH is transmitted, or the PDSCH instead of the DRS is transmitted, thereby either reducing data transmission efficiency or reducing a DRS transmission opportunity accordingly. The method C2 can perform multiplex transmission over any subframe, thereby solving the above problem.

A specific multiplexing method may include:

### Method C2-1:

If a data transmission burst contains a DRS candidate transmission subframe or DRS candidate time point, a DRS will be transmitted at the DRS candidate transmission subframe or DRS candidate time point no matter whether the DRS should be transmitted at the DRS candidate transmission subframe or DRS candidate time point (whether DRS is transmitted at a DRS candidate time point also depends on a DRS transmission mode, an LBT result or other factors such as the methods B2/B3, and some DRS candidate time points will attempt to transmit the DRS only when the DRS is transmitted unsuccessfully at the previous candidate time point).

A PDSCH and the DRS may be subjected to multiplex transmission over the same subframe, but the PDSCH cannot be mapped to an RE occupied by the DRS in the same subframe.

A DRS time frequency pattern or signal composition during multiplex transmission of the PDSCH may be identical to or different from that during independent transmission of the DRS. Method 1: the DRS is always transmitted by using the same time frequency pattern or signal composition, that is, the same time frequency pattern is adopted for independent transmission and multiplex transmission of the PDSCH. Method 2: a DRS with a predefined pattern 1 is transmitted during independent transmission of the DRS in order to meet time frequency continuity and a rule requirement of an occupied bandwidth. During transmission with the PDSCH, it is unnecessary to transmit control information/broadcast information, a new RS, or other information or signals filled to meet time frequency continuity and a rule requirement of an occupied bandwidth, and a DRS with a predefined pattern 2 is transmitted. In addition, during transmission with the PDSCH, the adopted DRS time frequency pattern and signal composition are relatively fixed or identical, that is, DRS time frequency patterns transmitted together with the PDSCH are identical. Method 3: DRS time frequency patterns and signal composition may be different regardless of independent transmission of a DRS and multiplex transmission of the PDSCH, or one of DRS pattern types within a limited range is selected for transmission. The method 2 is preferred.

A base station may transmit downlink signaling such as DCI signaling to indicate at least one of whether DRS is transmitted or information such as DRS configuration information (such as at least one of time frequency pattern, or DRS time frequency pattern type). This method is particularly applied to the method 3.

The base station may transmit downlink signaling or channel to inform at least one of whether DRS is transmitted or a rate matching pattern (or DRS transmission time frequency pattern). The downlink signaling or channel may include DCI signaling, PDCCH/EPDCCH, and the like. If DRS patterns are always identical or patterns are identical during multiplexing and known to a UE, DCI signaling may not be adopted.

For the method C2-1, a UE may make at least one of the following assumptions or behaviors:
a UE blindly detects a DRS over all DRS candidate transmission subframes;
a UE assumes that a DRS will be transmitted at all DRS candidate transmission subframes or candidate time points within a data transmission burst; and
a UE will consider that a PDSCH cannot be mapped to an RE occupied by a DRS in a DRS candidate transmission subframe or candidate time point within a data transmission burst during rate matching.

A DRS time frequency pattern or signal composition during multiplex transmission of the PDSCH may be identical to or different from that during independent transmission of the DRS. However, a multiplex transmission DRS pattern is known to the UE, that is, a DRS time frequency pattern transmitted together with the PDSCH or resource occupation is identical.

Or, downlink signaling or channel transmitted by the base station is received. The downlink signaling or channel is configured to inform at least one of whether DRS is transmitted or a rate matching pattern (or DRS transmission time frequency pattern). The downlink signaling or channel may include DCI signaling, PDCCH/EPDCCH, and the like.

### Method C2-2:

If a data transmission burst contains a DRS candidate transmission subframe or DRS candidate time point, whether a DRS is transmitted at the DRS candidate transmission subframe or DRS candidate time point specifically depends on a DRS transmission mode, an LBT result or other factors such as the methods B2/B3.

If the DRS is transmitted at the DRS candidate transmission subframe or DRS candidate time point, a PDSCH cannot be mapped to an RE occupied by the DRS within the subframe or DRS time point.

If the DRS is not transmitted at the DRS candidate transmission subframe or DRS candidate time point, a PDSCH may be normally transmitted, and may be mapped to a time frequency resource corresponding to a DRS time frequency pattern.

An eNB may explicitly inform, by means of downlink signaling, a UE of at least one of whether DRS is transmitted at a candidate transmission subframe or candidate time point, or information such as DRS configuration information (such as at least one of time frequency pattern, or signal composition, and port). For example, the DCI signaling may be contained in scheduling signaling. Other non-scheduling UEs may perform blind detection, or may transmit at least one of information indicating whether DRS is transmitted or information such as DRS configuration information (such as at least one of time frequency pattern, or signal composition, and port) in a broadcasting manner.

For the method C2-2, a UE may make at least one of the following assumptions or behaviors:
a UE such as a non-serving UE may blindly detect a DRS over all DRS candidate transmission subframes;
a UE receives downlink signaling or channel transmitted by a base station, the downlink signaling or channel being configured to inform whether DRS is transmitted or a rate matching pattern (or DRS transmission time frequency pattern), where the downlink signaling or channel may include DCI signaling, PDCCH/EPDCCH, and the like;
a UE may receive broadcast information to obtain information indicating whether a DRS is transmitted at at least one of a candidate time point or candidate transmission subframe, or DRS configuration information (such as at least one of time frequency pattern, or signal composition, and port); and
a UE will assume that a PDSCH cannot be mapped to an RE occupied by a DRS over a DRS candidate transmission subframe, that is, the UE will acquire at least one of information about whether DRS is transmitted or a DRS time frequency pattern according to blind detection or a downlink signaling/channel/broadcast information receiving result, so as to punch the RE occupied by the DRS, and if DRS transmission is not detected, it is unnecessary to punch the RE corresponding to the DRS time frequency pattern.

### Method C2-3:

If a data transmission burst contains DRS candidate transmission subframes or DRS candidate time points, a PDSCH cannot be mapped to a time frequency resource corresponding to a first DRS candidate time point or first candidate transmission subframe within the data transmission burst, and the PDSCH may be mapped to time frequency resources corresponding to the remaining candidate time points or candidate subframes.

A DRS time frequency pattern or signal composition during multiplex transmission of the PDSCH may be identical to or different from that during independent transmission of the DRS. Method 1: the DRS is always transmitted by using the same time frequency pattern or signal composition, that is, the same time frequency pattern is adopted for independent transmission and multiplex transmission of the PDSCH. Method 2: a DRS with a predefined pattern 1 is transmitted during independent transmission of the DRS in order to meet time frequency continuity and a rule requirement of an occupied bandwidth. During transmission with the PDSCH, it is unnecessary to transmit control information/broadcast information, a new RS, or other information or signals filled to meet time frequency continuity and a rule requirement of an occupied bandwidth, and a DRS with a predefined pattern 2 is transmitted. In addition, during transmission with the PDSCH, the adopted DRS time frequency pattern and signal composition are relatively fixed or identical, that is, DRS time frequency patterns transmitted together with the PDSCH are identical. Method 3: DRS time frequency patterns and signal composition may be different regardless of independent transmission of a DRS and multiplex transmission of the PDSCH, or one of DRS pattern types within a limited range is selected for transmission. The method 2 is preferred.

A base station may transmit downlink signaling or channel to inform at least one of whether DRS is transmitted or a rate matching pattern (or DRS transmission configuration information such as time frequency pattern and port). The downlink signaling or channel may include DCI signaling, PDCCH/EPDCCH, and the like. If DRS patterns are always identical or patterns are identical during multiplexing and known to a UE, DCI signaling may not be adopted.

For the method C2-3, a UE may make at least one of the following assumptions or behaviors:
a UE blindly detects a DRS over all DRS candidate transmission subframes;
a UE assumes that a DRS will be transmitted at a first DRS candidate transmission subframe or candidate time point within a data transmission burst, and the DRS will not be transmitted at other DRS candidate transmission subframes or candidate time points; and
a UE will consider that a PDSCH cannot be mapped to an RE occupied by a DRS in a first DRS candidate transmission subframe or candidate time point within a data transmission burst during rate matching.

A DRS time frequency pattern or signal composition during multiplex transmission of the PDSCH may be identical to or different from that during independent transmission of the DRS. However, a multiplex transmission DRS pattern is known to the UE, that is, a DRS time frequency pattern transmitted together with the PDSCH or resource occupation is identical.

Or, downlink signaling or channel transmitted by the base station is received. The downlink signaling or channel is configured to inform at least one of whether DRS is transmitted or a rate matching pattern (or DRS transmission configuration information such as time frequency pattern and port). The downlink signaling or channel may include DCI signaling, PDCCH/EPDCCH, and the like.

Further, on the basis of the method C2-2, a situation of multiplexing a PDSCH and a DRS over at least one of a subframe 0 or a subframe 5 may be limited. The limitation method is similar to the method C1-2-1, the method C1-2-2 and the method C1-2-3.

The present embodiment also provides a computer-readable storage medium, storing a computer-executable instruction. When the computer-executable instruction is executed by a processor, at least one of the multiplex transmission method for a DRS and a PDSCH or the method for receiving a PDSCH within a data transmission burst may be implemented.

The sequence numbers of the embodiments of the disclosure are merely used for descriptions and do not represent the preference of the embodiments. By describing the above implementation mode, those skilled in the art may clearly know that the embodiment methods may be implemented by means of software and a necessary general hardware platform, or may, certainly, be implemented by hardware. However, under many circumstances, the former is a preferred implementation mode. Based on this understanding, the technical solutions of the disclosure may be substantially embodied in a form of a software product or parts contributing to the traditional art may be embodied in a form of a software product, and a computer software product is stored in a storage medium (for example, a Read-Only Memory/Random Access Memory (ROM/RAM), a magnetic disk or an optical disk), which includes a plurality of instructions enabling a terminal device (a mobile phone, a computer, a server or a network device) to the method according to each embodiment of the disclosure.

The above is only the preferred embodiments of the disclosure and does not limit the patent scope of the disclosure accordingly. Equivalent structure or equivalent flow transformations made by utilizing the specification and drawings of the disclosure or direct or indirect applications to other relevant technical fields may fall within the scope of patent protection of the disclosure in the same way.

### INDUSTRIAL APPLICABILITY

According to a multiplex transmission method for a DRS and a PDSCH and a base station provided in the embodiments of the disclosure, over a data transmission burst, a subframe for transmitting a DRS within the data transmission burst is determined; and multiplex transmission is performed on a PDSCH over the subframe for transmitting the DRS within the data transmission burst, or multiplex transmission is performed on a PDSCH only over at least one of a subframe 0 or a subframe 5 for transmitting the DRS within the data transmission burst.

The embodiments of the disclosure also provide a method for receiving a PDSCH within a data transmission burst and a terminal, when data is received within a data transmission burst, a first subframe within the data transmission burst is determined, the first subframe referring to a subframe for transmitting a PDSCH which can be mapped to only an RE other than an RE corresponding to a DRS pattern of the first subframe; and the PDSCH is received over the first subframe.

The above-mentioned multiplex transmission and receiving method for an LAA DRS and a PDSCH and corresponding devices solve a problem about how to perform multiplex transmission and receiving on an LAA DRS and a PDSCH within a data transmission burst and a problem about PDSCH rate matching.

## Claims

1. A multiplex transmission method for a Discovery Reference Signal, DRS, and a Physical Downlink Shared Channel, PDSCH, applied to a base station, the method comprising:
determining, over a data transmission burst, a subframe for transmitting the DRS within the data transmission burst (110); and
performing multiplex transmission on the PDSCH over the subframe for transmitting the DRS within the data transmission burst (120),
wherein the subframe for transmitting the DRS is a DRS candidate subframe, and a DRS transmission policy indicates that the subframe should transmit a DRS,
wherein the DRS candidate subframe is a subframe where a DRS is allowed to be transmitted,
wherein the DRS transmission policy comprises transmitting, within the data transmission burst, a DRS over a DRS candidate subframe satisfying the following condition:
the DRS candidate subframe is an i^{th} DRS candidate subframe within the data transmission burst, i being one of 1, 2, ..., I, I being a number of DRS candidate subframes within the data transmission burst.

2. The method according to claim 1, wherein performing multiplex transmission on the PDSCH over the subframe comprises at least one of the following actions:
mapping the PDSCH to a symbol other than a symbol for transmitting the DRS in the subframe; or
mapping the PDSCH to a Resource Element, RE, other than an RE corresponding to a DRS pattern in a symbol for transmitting the DRS in the subframe.

3. The method according to claim 1, further comprising:
setting, when a DRS is transmitted exclusively over a subframe, a DRS pattern used by the subframe as a first pattern or a pattern in a first group of patterns; and
setting, when multiplex transmission is performed on a PDSCH over a subframe, a DRS pattern used by the subframe as a second pattern or a pattern in a second group of patterns,
wherein the second pattern is identical to or different from the first pattern, and the second group of patterns is identical to or different from the first group of patterns,
and wherein
the first pattern or the pattern in the first group of patterns comprises a DRS and filled information; and
when the second pattern is different from the first pattern, the second pattern comprises a DRS, but does not comprise filled information, and when the second group of patterns is different from the first group of patterns, the pattern in the second group of patterns comprises a DRS, but does not comprise filled information,
the filled information being information, other than a PDSCH and a DRS, filled for meeting at least one of time domain continuity or occupied bandwidth requirements.

4. The method according to any one of claims 1 to 3, further comprising:
transmitting at least one of DRS configuration information or DRS transmission information of the data transmission burst to a terminal by means of one or more of downlink control signaling, a downlink control channel or broadcast information,
wherein the DRS configuration information comprises one or more of the following information:
information indicating whether a DRS pattern adopted for exclusively transmitting a DRS is identical to a DRS pattern adopted for multiplex transmission of the DRS and a PDSCH;
information about a DRS pattern;
information about a port for transmitting a DRS composition signal; and
information about signal composition of a DRS; and
wherein the DRS transmission information of the data transmission burst comprises one or more of the following information:
information about whether a DRS is transmitted within the data transmission burst: and
position information about a subframe for transmitting a DRS within the data transmission burst.

5. A method for receiving a Physical Downlink Shared Channel, PDSCH, within a data transmission burst, applied to a terminal, the method comprising:
determining, when data is received within a data transmission burst, a first subframe within the data transmission burst, the first subframe being a subframe for transmitting a PDSCH which can be mapped to only a Resource Element, RE, other than an RE corresponding to a Discovery Reference Signal, DRS, pattern of the first subframe; and
receiving the PDSCH over the first subframe,
wherein determining the first subframe within the data transmission burst comprises:
determining a second subframe within the data transmission burst according to a first appointment between the terminal and a base station, the second subframe being a subframe where an RE corresponding to a DRS pattern has been occupied by information other than a PDSCH ; and
determining whether to perform multiplex reception on a PDSCH over the second subframe according to a second appointment between the terminal and the base station, and
when determining to perform multiplex reception on a PDSCH over the second subframe, setting the second subframe as the first subframe within the data transmission burst,
wherein the first appointment comprises:
when a subframe within the data transmission burst is a DRS candidate subframe, and a DRS transmission policy indicates that the subframe should transmit a DRS, the subframe is the second subframe,
wherein the DRS candidate subframe is a subframe where a DRS is allowed to be transmitted,
wherein the DRS transmission policy comprises transmitting, within the data transmission burst, a DRS over a DRS candidate subframe satisfying the following condition: the DRS candidate subframe is an i^{th} DRS candidate subframe within the data transmission burst, i being one of 1, 2, ..., I, I being a number of DRS candidate subframes within the data transmission burst,
wherein the second appointment comprises:
multiplex transmission is performed on a PDSCH over the second subframe within the data transmission burst.

6. The method according to claim 5, wherein
the DRS pattern of the first subframe is determined according to at least one of a third appointment between the terminal and the base station or third indication information transmitted by the base station,
wherein the third appointment comprises:
when the first information is transmitted exclusively over a subframe, a DRS pattern used by the subframe is a first pattern or a pattern in a first group of patterns; and
when multiplex transmission is performed on the first information and a PDSCH over a subframe, a DRS pattern used by the subframe is a second pattern or a pattern in a second group of patterns,
the second pattern being identical to or different from the first pattern, and the second group of patterns being identical to or different from the first group of patterns,
and wherein
the first pattern or the pattern in the first group of patterns comprises a DRS and filled information; and
when the second pattern is different from the first pattern, the second pattern comprises a DRS, but does not comprise filled information, and when the second group of patterns is different from the first group of patterns, the pattern in the second group of patterns comprises a DRS, but does not comprise filled information,
the filled information being information, other than a PDSCH and a DRS, filled for meeting at least one of time domain continuity or occupied bandwidth requirements.

7. The method according to any one of claims 5 to 6, further comprising:
acquiring one or more of the following information by means of one or more of downlink control signaling, a downlink control channel or broadcast information:
first indication information, indicating the second subframe within the data transmission burst;
second indication information, indicating whether to perform multiplex transmission on a PDSCH over the second subframe; and
third indication information, indicating a DRS pattern used over the first subframe.

8. A base station, comprising:
a determination module, configured to determine, over a data transmission burst, a subframe for transmitting a Discovery Reference Signal, DRS, within the data transmission burst; and
a multiplexing module, configured to perform multiplex transmission on a Physical Downlink Shared Channel, PDSCH, over the subframe for transmitting the DRS within the data transmission burst,
wherein the determination module determines that the subframe for transmitting the DRS is a DRS candidate subframe, and a DRS transmission policy indicates that the subframe should transmit a DRS,
wherein the DRS candidate subframe is a subframe where a DRS is allowed to be transmitted,
wherein the DRS transmission policy comprises: transmitting, within the data transmission burst, a DRS over a DRS candidate subframe satisfying the following condition:
the DRS candidate subframe is an i^{th} DRS candidate subframe within the data transmission burst, i being one of 1, 2, ..., I, I being a number of DRS candidate subframes within the data transmission burst.

9. A terminal, comprising:
a determination module, configured to determine, when data is received within a data transmission burst, a first subframe within the data transmission burst, the first subframe being a subframe for transmitting a Physical Downlink Shared Channel, PDSCH, which can be mapped to only a Resource Element, RE, other than an RE corresponding to a Discovery Reference Signal, DRS, pattern of the first subframe; and
a receiving module, configured to receive the PDSCH over the first subframe,
wherein the action of determining, by the determination module, a first subframe within the data transmission burst comprises:
determining a second subframe within the data transmission burst according to a first appointment between the terminal and a base station, the second subframe being a subframe where an RE corresponding to a DRS pattern has been occupied by information other than a PDSCH ; and
determining whether to perform multiplex reception on a PDSCH over the second subframe according to a second appointment between the terminal and the base station, and
when determining to performing multiplex reception on a PDSCH over the second subframe, setting the second subframe as the first subframe within the data transmission burst,
wherein the first appointment comprises:
when a subframe within the data transmission burst is a DRS candidate subframe, and a DRS transmission policy indicates that the subframe should transmit a DRS, the subframe is the second subframe,
wherein the DRS candidate subframe is a subframe where a DRS is allowed to be transmitted,
wherein the DRS transmission policy comprises transmitting, within the data transmission burst, a DRS over a DRS candidate subframe satisfying the following condition: the DRS candidate subframe is an i^{th} DRS candidate subframe within the data transmission burst, i being one of 1, 2, ..., I, I being a number of DRS candidate subframes within the data transmission burst,
wherein the second appointment comprises:
multiplex transmission is performed on a PDSCH over the second subframe within the data transmission burst.

## Patentansprüche

1. Multiplexübertragungsverfahren für ein Entdeckungsbezugssignal, DRS, und einen gemeinsam genutzten physikalischen Downlink-Kanal, PDSCH, welches auf eine Basisstation angewendet wird, wobei das Verfahren umfasst:
ein Bestimmen (110) eines Unterrahmens über einen Datenübertragungssignalblock, um das DRS innerhalb des Datenübertragungssignalblocks zu übertragen, und
ein Durchführen (120) einer Multiplexübertragung auf dem PDSCH über den Unterrahmen, um das DRS innerhalb des Datenübertragungssignalblocks zu übertragen,
wobei der Unterrahmen zum Übertragen des DRS ein DRS-Kandidaten-Unterrahmen ist und eine DRS-Übertragungsrichtlinie angibt, dass der Unterrahmen das DRS übertragen soll,
wobei der DRS-Kandidaten-Unterrahmen der Unterrahmen ist, in dem das DRS übertragen werden darf,
wobei die DRS-Übertragungsrichtlinie das Übertragen des DRS innerhalb des Datenübertragungssignalblocks über den DRS-Kandidaten-Unterrahmen umfasst, der die folgende Bedingung erfüllt:
dass der DRS-Kandidaten-Unterrahmen ein i-ter DRS-Kandidaten-Unterrahmen innerhalb des Datenübertragungssignalblocks ist, wobei das i eines von 1, 2, ..., I ist, und wobei das I eine Anzahl von DRS-Kandidaten-Unterrahmen innerhalb des Datenübertragungssignalblocks ist.

2. Verfahren nach Anspruch 1, wobei das Durchführen der Multiplexübertragung auf dem PDSCH über den Unterrahmen mindestens eine der folgenden Aktionen umfasst:
ein Zuordnen des PDSCH zu einem anderen Symbol als ein Symbol zum Übertragen des DRS in dem Unterrahmen, oder
ein Zuordnen des PDSCH zu einem anderen Ressourcenelement, RE, als ein RE, das einem DRS-Muster in einem Symbol zum Übertragen des DRS in dem Unterrahmen entspricht.

3. Verfahren nach Anspruch 1, welches ferner umfasst:
ein Festlegen eines DRS-Musters, das von dem Unterrahmen als ein erstes Muster oder als ein Muster in einer ersten Gruppe von Mustern verwendet wird, wenn das DRS ausschließlich über den Unterrahmen übertragen wird, und
ein Festlegen eines DRS-Musters, das von dem Unterrahmen als ein zweites Muster oder als ein Muster in einer zweiten Gruppe von Mustern verwendet wird, wenn die Multiplexübertragung auf dem PDSCH über den Unterrahmen durchgeführt wird,
wobei das zweite Muster mit dem ersten Muster identisch ist oder sich von diesem unterscheidet und die zweite Gruppe von Mustern mit der ersten Gruppe von Mustern identisch ist oder sich von dieser unterscheidet, und
wobei das erste Muster oder das Muster in der ersten Gruppe von Mustern das DRS und gefüllte Informationen aufweist, und
wobei wenn sich das zweite Muster von dem ersten Muster unterscheidet, das zweite Muster das DRS aufweist und es jedoch keine gefüllten Informationen enthält, und wenn sich die zweite Gruppe von Mustern von der ersten Gruppe von Mustern unterscheidet, das Muster in der zweiten Gruppe von Mustern das DRS aufweist und es aber keine gefüllten Informationen enthält, und
wobei die gefüllten Informationen andere Informationen als das PDSCH und das DRS sind, die gefüllt sind, um mindestens eine der Anforderungen an die Zeitdomänenkontinuität oder die belegte Bandbreite zu erfüllen.

4. Verfahren nach einem der Ansprüche 1 bis 3, welches ferner umfasst:
ein Übertragen von mindestens einer der Konfigurationsinformationen des DRS oder der Übertragungsinformationen des DRS des Datenübertragungssignalblocks an ein Endgerät mittels einer oder mehrerer Abwärtsverbindungssteuersignale, eines Abwärtsverbindungssteuerkanals oder von Rundfunkinformationen,
wobei die Konfigurationsinformationen des DRS eine oder mehrere der folgenden Informationen umfassen:
eine Information, die angibt, ob ein DRS-Muster, das zum ausschließlichen Senden des DRS verwendet wird, mit einem DRS-Muster identisch ist, das zu der Multiplexübertragung des DRS und des PDSCH verwendet wird,
eine Information über das DRS-Muster,
eine Information über einen Anschluss zum Übertragen eines zusammengesetzten DRS-Signals, und
eine Information über die Signalzusammensetzung des DRS, und
wobei die Übertragungsinformation des DRS des Datenübertragungssignalblocks eine oder mehrere der folgenden Informationen aufweist:
eine Information darüber, ob das DRS innerhalb des Datenübertragungssignalblocks übertragen wird, und
eine Positionsinformation über den Unterrahmen zum Übertragen des DRS innerhalb des Datenübertragungssignalblocks.

5. Verfahren zum Empfangen eines gemeinsam genutzten physischen Downlink-Kanals, PDSCH, innerhalb eines Datenübertragungssignalblocks, der auf ein Endgerät angewendet wird, wobei das Verfahren umfasst:
ein Bestimmen eines ersten Unterrahmens innerhalb des Datenübertragungssignalblocks, wenn Daten innerhalb des Datenübertragungssignalblocks empfangen werden, wobei der erste Unterrahmen ein Unterrahmen zum Übertragen des PDSCH ist, der nur einem Ressourcenelement, RE, zugeordnet werden kann, das nicht dem RE entspricht, das einem Muster des Entdeckungsbezugssignals, DRS, des ersten Unterrahmens entspricht, und
ein Empfangen des PDSCH über den ersten Unterrahmen,
wobei das Bestimmen des ersten Unterrahmens innerhalb des Datenübertragungssignalblocks umfasst:
ein Bestimmen eines zweiten Unterrahmens innerhalb des Datenübertragungssignalblocks gemäß einer ersten Anordnung zwischen dem Endgerät und einer Basisstation, wobei der zweite Unterrahmen ein Unterrahmen ist, in dem ein RE, das einem DRS-Muster entspricht, mit anderen Informationen als dem PDSCH belegt worden ist, und
ein Bestimmen, ob ein Multiplexempfang auf dem PDSCH über den zweiten Unterrahmen gemäß einer zweiten Anordnung zwischen dem Endgerät und der Basisstation durchgeführt werden soll, und wenn bestimmt worden ist, dass ein Multiplexempfang auf einem PDSCH über den zweiten Unterrahmen durchgeführt werden soll, ein Festlegen des zweiten Unterrahmens als einen ersten Unterrahmen innerhalb der Datenübertragungssignalblocks,
wobei die erste Anordnung umfasst,
dass wenn der Unterrahmen innerhalb des Datenübertragungssignalblocks ein DRS-Kandidaten-Unterrahmen ist und eine DRS-Übertragungsrichtlinie angibt, dass der Unterrahmen das DRS übertragen soll, der Unterrahmen der zweite Unterrahmen ist,
wobei der DRS-Kandidaten-Unterrahmen der Unterrahmen ist, in dem das DRS übertragen werden darf,
wobei die DRS-Übertragungsrichtlinie das Übertragen des DRS über den DRS-Kandidaten-Unterrahmen innerhalb des Datenübertragungssignalblocks umfasst, der einer der folgenden Bedingung erfüllt: der DRS-Kandidaten-Unterrahmen ist ein i-ter DRS-Kandidaten-Unterrahmen innerhalb des Datenübertragungssignalblocks, wobei das i einer von 1, 2 ist...., I, und wobei das I eine Anzahl von DRS-Kandidaten-Unterrahmen innerhalb des Datenübertragungssignalblocks ist,
wobei die zweite Anordnung umfasst,
dass die Multiplexübertragung auf einem PDSCH über den zweiten Unterrahmen innerhalb des Datenübertragungssignalblocks durchgeführt wird.

6. Verfahren nach Anspruch 5, wobei
das DRS-Muster des ersten Unterrahmens gemäß mindestens einer dritten Anordnung zwischen dem Endgerät und der Basisstation oder einer dritten Anzeigeinformation, die von der Basisstation übertragen wird, bestimmt wird,
wobei die dritte Anordnung umfasst,
dass wenn die erste Information ausschließlich über den Unterrahmen übertragen wird, das DRS-Muster, das von dem Unterrahmen verwendet wird, ein erstes Muster oder ein Muster in einer ersten Gruppe von Mustern ist, und
dass wenn eine Multiplexübertragung an der ersten Information und dem PDSCH über den Unterrahmen durchgeführt wird, das DRS-Muster, das von dem Unterrahmen verwendet wird, ein zweites Muster oder ein Muster in einer zweiten Gruppe von Mustern ist,
wobei das zweite Muster mit dem ersten Muster identisch ist oder sich von diesem unterscheidet und die zweite Gruppe von Mustern mit der ersten Gruppe von Mustern identisch ist oder sich von dieser unterscheidet, und
wobei das erste Muster oder das Muster in der ersten Gruppe von Mustern das DRS und gefüllte Informationen umfasst, und
dass wenn sich das zweite Muster von dem ersten Muster unterscheidet, das zweite Muster das DRS aufweist und es aber keine gefüllten Informationen enthält, und dass wenn sich die zweite Gruppe von Mustern von der ersten Gruppe von Mustern unterscheidet, das Muster in der zweiten Gruppe von Mustern das DRS aufweist und es aber keine gefüllten Informationen enthält,
wobei die gefüllten Informationen andere Informationen als der PDSCH und das DRS sind, die gefüllt sind, um mindestens eine der Anforderungen an die Zeitdomänenkontinuität oder die belegte Bandbreite zu erfüllen.

7. Verfahren nach einem der Ansprüche 5 bis 6, welches ferner umfasst:
ein Erfassen von einer oder von mehreren der folgenden Informationen mittels einer oder mehrerer Abwärtsverbindungssteuersignale, eines Abwärtsverbindungssteuerkanals oder von Rundfunkinformationen:
eine erste Anzeigeinformation, die den zweiten Unterrahmen innerhalb des Datenübertragungssignalblocks anzeigt,
eine zweite Anzeigeinformation, die anzeigt, ob eine Multiplexübertragung auf einem PDSCH über den zweiten Unterrahmen durchgeführt werden soll, und
eine dritte Anzeigeinformation, die das DRS-Muster anzeigt, das über dem ersten Unterrahmen verwendet wird.

8. Basisstation, welche aufweist:
ein Bestimmungsmodul, das ausgestaltet ist, um über einen Datenübertragungssignalblock einen Unterrahmen zum Übertragen eines Entdeckungsbezugssignals, DRS, innerhalb des Datenübertragungssignalblocks zu bestimmen, und
ein Multiplexmodul, das ausgestaltet ist, um eine Multiplexübertragung auf einem gemeinsam genutzten physischen Downlink-Kanal, PDSCH, über den Unterrahmen zum Übertragen des DRS innerhalb des Datenübertragungssignalblocks durchzuführen,
wobei das Bestimmungsmodul bestimmt, dass der Unterrahmen zum Übertragen des DRS ein DRS-Kandidaten-Unterrahmen ist, und wobei eine DRS-Übertragungsrichtlinie angibt, dass der Unterrahmen das DRS übertragen soll,
wobei der DRS-Kandidaten-Unterrahmen der Unterrahmen ist, in dem das DRS übertragen werden darf,
wobei die DRS-Übertragungsrichtlinie umfasst: ein Übertragen des DRS innerhalb des Entdeckungsbezugssignals über den DRS-Kandidaten-Unterrahmen, der die folgende Bedingung erfüllt:
der DRS-Kandidaten-Unterrahmen ist ein i-ter DRS-Kandidaten-Unterrahmen innerhalb des Entdeckungsbezugssignals, wobei das i einer von 1, 2, ..., I ist, und wobei das I eine Anzahl von DRS-Kandidaten-Unterrahmen innerhalb des Entdeckungsbezugssignals ist.

9. Endgerät, welches aufweist:
ein Bestimmungsmodul, das ausgestaltet ist, um zu bestimmen, wann Daten innerhalb eines Datenübertragungssignalblocks empfangen werden, und wenn ein erster Unterrahmen innerhalb des Datenübertragungssignalblocks ist, wobei der erste Unterrahmen ein Unterrahmen zum Übertragen eines gemeinsam genutzten physischen Downlink-Kanals, PDSCH, ist, der nur einem Ressourcenelement, RE, außer einem RE zugeordnet werden kann, das einem Muster eines Entdeckungsbezugssignals, DRS, des ersten Unterrahmens entspricht, und
ein Empfangsmodul, das ausgestaltet ist, um den PDSCH über den ersten Unterrahmen zu empfangen,
wobei die Aktion des Bestimmens des ersten Unterrahmens innerhalb des Datenübertragungssignalblocks durch das Bestimmungsmodul umfasst:
ein Bestimmen eines zweiten Unterrahmens innerhalb des Datenübertragungssignalblocks gemäß einer ersten Anordnung zwischen dem Endgerät und einer Basisstation, wobei der zweite Unterrahmen ein Unterrahmen ist, in dem ein RE, das einem DRS-Muster entspricht, mit anderen Informationen als dem PDSCH belegt worden ist, und
ein Bestimmen, ob ein Multiplexempfang auf einem PDSCH über den zweiten Unterrahmen gemäß einer zweiten Anordnung zwischen dem Endgerät und der Basisstation durchgeführt werden soll, und
dass wenn bestimmt worden ist, dass der Multiplexempfang auf dem PDSCH über den zweiten Unterrahmen durchgeführt werden soll, der zweite Unterrahmen als ein erster Unterrahmen innerhalb des Datenübertragungssignalblocks festgelegt wird,
wobei die erste Anordnung umfasst:
dass der Unterrahmen innerhalb des Datenübertragungssignalblocks der DRS-Kandidaten-Unterrahmen ist und dass eine DRS-Übertragungsrichtlinie angibt, dass der Unterrahmen das DRS übertragen soll,
wobei der DRS-Kandidaten-Unterrahmen der Unterrahmen ist, in dem das DRS übertragen werden darf,
wobei die DRS-Übertragungsrichtlinie das Übertragen des DRS über den DRS-Kandidaten-Unterrahmen innerhalb des Datenübertragungssignalblocks umfasst, der die folgende Bedingung erfüllt: der DRS-Kandidaten-Unterrahmen ist ein i-ter DRS-Kandidaten-Unterrahmen innerhalb des Datenübertragungssignalblocks, wobei das i einer von 1, 2 ist...., I, und wobei das I eine Anzahl von DRS-Kandidaten-Unterrahmen innerhalb des Datenübertragungssignalblocks ist
wobei die zweite Anordnung umfasst,
dass die Multiplexübertragung auf dem PDSCH über den zweiten Unterrahmen innerhalb des Datenübertragungssignalblocks durchgeführt wird.

## Revendications

1. Procédé de transmission multiplex pour un Signal de Référence de Découverte, DRS, et un Canal Physique Partagé de Liaison Descendante, PDSCH, appliqué à une station de base, le procédé comprenant :
détermination, à travers une salve de transmission de données, d'une sous-trame de transmission du DRS dans la salve de transmission de données (110) ; et
réalisation d'une transmission multiplex sur le PDSCH à travers la sous-trame de transmission du DRS dans la salve de transmission de données (120),
dans lequel la sous-trame de transmission du DRS est une sous-trame candidate de DRS, et une politique de transmission de DRS indique que la sous-trame doit transmettre un DRS,
dans lequel la sous-trame candidate de DRS est une sous-trame où un DRS est autorisé à être transmis,
dans lequel la politique de transmission de DRS comprend la transmission, dans la salve de transmission de données, d'un DRS à travers une sous-trame candidate de DRS satisfaisant la condition suivante :
la sous-trame candidate de DRS est une i^{ème} sous-trame candidate de DRS dans la salve de transmission de données, i étant l'un parmi 1, 2, ...I, I étant un nombre de sous-trames candidates de DRS dans la salve de transmission de données.

2. Procédé selon la revendication 1, dans lequel la réalisation de la transmission multiplex sur le PDSCH à travers la sous-trame comprend au moins une des actions suivantes :
mise en correspondance du PDSCH avec un symbole autre qu'un symbole de transmission du DRS dans la sous-trame ; ou
mise en correspondance du PDSCH avec un Elément Ressource, RE, autre qu'un RE correspondant à un motif de DRS dans un symbole de transmission du DRS dans la sous-trame.

3. Procédé selon la revendication 1, comprenant en outre :
définition, lorsqu'un DRS est transmis exclusivement à travers une sous-trame, d'un motif de DRS utilisé par la sous-trame comme un premier motif ou un motif dans un premier groupe de motifs ; et
définition, lorsque la transmission multiplex est réalisée sur un PDSCH à travers une sous-trame, d'un motif de DRS utilisé par la sous-trame comme un deuxième motif ou un motif dans un deuxième groupe de motifs,
dans lequel le deuxième motif est identique au premier motif ou différent de celui-ci, et le deuxième groupe de motifs est identique au premier groupe de motifs ou différent de celui-ci,
et dans lequel
le premier motif ou le motif dans le premier groupe de motifs comprend un DRS et une information remplie ; et
lorsque le deuxième motif est différent du premier motif, le deuxième motif comprend un DRS, mais ne comprend pas d'information remplie, et lorsque le deuxième groupe de motifs est différent du premier groupe de motifs, le motif dans le deuxième groupe de motifs comprend un DRS, mais ne comprend pas d'information remplie,
l'information remplie étant une information, autre qu'un PDSCH et un DRS, remplie pour satisfaire au moins un élément parmi des exigences de continuité de domaine temporel ou des exigences de bande passante occupée.

4. Procédé selon l'une quelconque des revendications 1 à 3, comprenant en outre :
transmission d'au moins un élément parmi une information de configuration de DRS ou une information de transmission de DRS de la salve de transmission de données vers un terminal au moyen d'un ou plusieurs éléments parmi un signal de commande de liaison descendante, un canal de commande de liaison descendante ou une information de diffusion,
dans lequel l'information de configuration de DRS comprend une ou plusieurs des informations suivantes :
information indiquant si un motif de DRS adopté pour transmettre exclusivement un DRS est identique à un motif de DRS adopté pour la transmission multiplex du DRS et d'un PDSCH ;
information sur un motif de DRS ;
information sur un accès de transmission d'un signal de composition de DRS ; et
information sur la composition de signal d'un DRS ; et
dans lequel l'information de transmission de DRS de la salve de transmission de données comprend une ou plusieurs des informations suivantes :
information si un DRS est transmis dans la salve de transmission de données ; et
information de position sur une sous-trame de transmission d'un DRS dans la salve de transmission de données.

5. Procédé de réception d'un Canal Physique Partagé de Liaison Descendante, PDSCH, dans une salve de transmission de données, appliqué à un terminal, le procédé comprenant :
détermination, lorsque les données sont reçues dans une salve de transmission de données, d'une première sous-trame dans la salve de transmission de données, la première sous-trame étant une sous-trame de transmission d'un PDSCH qui peut être mis en correspondance avec uniquement un Elément Resource, RE, autre qu'un RE correspondant à un motif de Signal de Référence de Découverte, DRS, de la première sous-trame ; et
réception du PDSCH à travers la première sous-trame,
dans lequel la détermination de la première sous-trame dans la salve de transmission de données comprend :
détermination d'une deuxième sous-trame dans la salve de transmission de données selon une première affectation entre le terminal et une station de base, la deuxième sous-trame étant une sous-trame où un RE correspondant à un motif de DRS a été occupé par une information autre qu'un PDSCH ; et
détermination de la nécessité de réaliser la réception multiplex sur un PDSCH à travers une deuxième sous-trame selon une deuxième affectation entre le terminal et la station de base, et
lors de la détermination de la réalisation de la réception multiplex sur un PDSCH à travers la deuxième sous-trame, définition de la deuxième sous-trame comme la première sous-trame dans la salve de transmission de données,
dans lequel la première affectation comprend :
lorsqu'une sous-trame dans la salve de transmission de données est une sous-trame candidate de DRS, et une politique de transmission de DRS indique que la sous-trame doit transmettre un DRS, la sous-trame est la deuxième sous-trame,
dans lequel la sous-trame candidate de DRS est une sous-trame où un DRS est autorisé à être transmis,
dans lequel la politique de transmission de DRS comprend la transmission, dans la salve de transmission de données, d'un DRS à travers une sous-trame candidate de DRS satisfaisant la condition suivante : la sous-trame candidate de DRS une i^{ème} sous-trame candidate de DRS dans la salve de transmission de données, i étant l'un parmi 1, 2, ... I, I étant un nombre de sous-trames candidates de DRS dans la salve de transmission de données,
dans lequel la deuxième affectation comprend :
la transmission multiplex est réalisée sur un PDSCH à travers la deuxième sous-trame dans la salve de transmission de données.

6. Procédé selon la revendication 5, dans lequel
le motif de DRS de la première sous-trame est déterminé selon au moins un élément parmi une troisième affectation entre le terminal et la station de base ou une troisième information d'indication transmise par la station de base,
dans lequel la troisième affectation comprend :
lorsque la première information est transmise exclusivement à travers une sous-trame, un motif de DRS utilisé par la sous-trame est un premier motif ou un motif dans un premier groupe de motifs ; et
lorsque la transmission multiplex est réalisée sur la première information et un PDSCH à travers une sous-trame, un motif de DRS utilisé par la sous-trame est un deuxième motif ou un motif dans un deuxième groupe de motifs,
le deuxième motif étant identique au premier motif ou différent de celui-ci, et le deuxième groupe de motifs étant identique au premier groupe de motifs ou différent de celui-ci,
et dans lequel
le premier motif ou le motif dans le premier groupe de motifs comprend un DRS et une information remplie ; et
lorsque le deuxième motif est différent du premier motif, le deuxième motif comprend un DRS, mais ne comprend pas d'information remplie, et lorsque le deuxième groupe de motifs est différent du premier groupe de motifs, le motif dans le deuxième groupe de motifs comprend un DRS, mais ne comprend pas d'information remplie,
l'information remplie étant une information, autre qu'un PDSCH et un DRS, remplie pour satisfaire au moins un élément parmi des exigences de continuité de domaine temporel ou des exigences de bande passante occupée.

7. Procédé selon l'une quelconque des revendications 5 à 6, comprenant en outre :
acquisition d'une ou plusieurs des informations suivantes au moyen d'un ou plusieurs éléments parmi un signal de commande de liaison descendante, un canal de commande de liaison descendante ou une information de diffusion :
première information d'indication, indiquant la deuxième sous-trame dans la salve de transmission de données ;
deuxième information d'indication, indiquant s'il faut réaliser la transmission multiplex sur un PDSCH à travers la deuxième sous-trame ; et
troisième information d'indication, indiquant un motif de DRS utilisé à travers la première sous-trame.

8. Station de base, comprenant :
un module de détermination, configuré pour déterminer, à travers une salve de transmission de données, une sous-trame de transmission d'un Signal de Référence de Découverte, DRS, dans la salve de transmission de données, et
un module de multiplexage, configuré pour réaliser une transmission multiplex sur un Canal Physique Partagé de Liaison Descendante, PDSCH, à travers la sous-trame de transmission du DRS dans la salve de transmission de données,
dans lequel le module de détermination détermine que la sous-trame de transmission du DRS est une sous-trame candidate de DRS, et une politique de transmission de DRS indique que la sous-trame doit transmettre un DRS,
dans lequel la sous-trame candidate de DRS est une sous-trame où un DRS est autorisé à être transmis,
dans lequel la politique de transmission de DRS comprend : transmission, dans la salve de transmission de données, d'un DRS à travers une sous-trame candidate de DRS satisfaisant la condition suivante :
la sous-trame candidate de DRS une i^{ème} sous-trame candidate de DRS dans la salve de transmission de données, i étant l'un parmi 1, 2, ... I, I étant un nombre de sous-trames candidates de DRS dans la salve de transmission de données.

9. Terminal, comprenant :
un module de détermination, configuré pour déterminer, lorsqu'une donnée est reçue dans une salve de transmission de données, une première sous-trame dans la salve de transmission de données, la première sous-trame étant une sous-trame de transmission d'un Canal Physique Partagé de Liaison Descendante, PDSCH, qui peut être mis en correspondance avec uniquement un Elément Ressource, RE, autre qu'un RE correspondant à un motif de Signal de Référence de Découverte, DRS, de la première sous-trame ; et
un module de réception, configuré pour recevoir le PDSCH à travers la première sous-trame,
dans lequel l'action de détermination, par le module de détermination, d'une première sous-trame dans la salve de transmission de données comprend :
détermination d'une deuxième sous-trame dans la salve de transmission de données selon une première affectation entre le terminal et une station de base, la deuxième sous-trame étant une sous-trame où un RE correspondant à un motif de DRS a été occupé par une information autre qu'un PDSCH ; et
détermination de la nécessité de réaliser la réception multiplex sur un PDSCH à travers la deuxième sous-trame selon une deuxième affectation entre le terminal et la station de base, et
lors de la détermination de la réalisation de la réception multiplex sur un PDSCH à travers la deuxième sous-trame, définition de la deuxième sous-trame comme la première sous-trame dans la salve de transmission de données,
dans lequel la première affectation comprend :
lorsqu'une sous-trame dans la salve de transmission de donnée est une sous-trame candidate de DRS, et une politique de transmission de DRS indique que la sous-trame doit transmettre un DRS, la sous-trame est la deuxième sous-trame,
dans lequel la sous-trame candidate de DRS est une sous-trame où un DRS est autorisé à être transmis,
dans lequel la politique de transmission de DRS comprend la transmission, dans la salve de transmission de données, d'un DRS à travers une sous-trame candidate de DRS satisfaisant la condition suivante : la sous-trame candidate de DRS une i^{ème} sous-trame candidate de DRS dans la salve de transmission de données, i étant l'un parmi 1, 2, ...I, I étant un nombre de sous-trames candidates de DRS dans la salve de transmission de données,
dans lequel la deuxième affectation comprend :
la transmission multiplex est réalisée sur un PDSCH à travers la deuxième sous-trame dans la salve de transmission de données.
